# EUROPEAN PATENT APPLICATION

(11) **EP 3 457 528 A1**
(43) Date of publication of application: **20.03.2019**
(21) Application number: 18187830.7
(22) Date of filing: 07.08.2018
(51) Int. Cl.: H02K 1/14, H02K 3/52, H02K 11/33, H02K 7/14

(54) **MOTOR, BLOWER, AND VACUUM CLEANER**

(30) Priority: 15.09.2017 JP 2017178337
(71) Applicant: Nidec Corporation, Kyoto-shi, Kyoto 601-8205 (JP)
(72) Inventor: SHIOZAWA, Kazuhiko, Kyoto, 601-8205 (JP); TAKAKI, Hitoshi, Kyoto, 601-8205 (JP)
(74) Representative: Zimmermann, Tankred Klaus

(57) **Abstract**

A motor (10) includes a shaft (11), a rotor (12) that rotates together with the shaft, and a stator (13) that is disposed to oppose the rotor in a radial direction. The stator includes a ring-shaped stator core (131) that includes a plurality of split stator cores (1310) joined to each other in a peripheral direction, a plurality of teeth (135) that extend in a radial direction from the respective split stator cores, and a plurality of coils (133) that are formed by winding a conducting wire around each of the plurality of teeth. Electronic components are disposed below the stator in an axial direction. At least a part of each electronic component overlaps the stator core in the axial direction. Joining portions (137) where the split stator cores arranged in the peripheral direction are joined and the electronic components are displaced in the peripheral direction.

## Description

### Field of the Invention

The present disclosure relates to a motor, a blower including the motor, and a vacuum cleaner including the blower.

### Description of the Related Art

An existing brushless motor is disclosed in Japanese Unexamined Patent Application Publication No. 2013-132127. This brushless motor includes a motor case, a bracket disposed to close an opening of the motor case, a substantially ring-shaped stator core attached to the motor case, a plurality of coils wound around the stator core, and a rotor disposed in a space defined by an inner peripheral surface of the stator core.

The stator core has a ring shape, and a plurality of teeth are formed on an inner peripheral side at equal intervals along the peripheral direction. In the stator core, the plurality of teeth are divided at equal intervals for each pole tooth unit in the peripheral direction, and a coil winding constituting each coil is wound in a direction orthogonal to each tooth. A back yoke connecting adjacent teeth is provided on an outer periphery of the stator core. Joining portions provided on the extensions of the teeth of the back yoke are joined to each other.

In the brushless motor disclosed in Japanese Unexamined Patent Application Publication No. 2013-132127, the joining portions to be welded are on an outer side of the teeth in the radial direction. In the brushless motor, after attaching an insulator to the teeth, a conducting wire is wound around each tooth to form a coil. Thereafter, the joining portions are secured to each other by, for example, welding.

### SUMMARY OF THE INVENTION

The inventors recognized that, in the brushless motor disclosed in Japanese Unexamined Patent Application Publication No. 2013-132127, since the joining portions exist on the extensions of the teeth of the back yoke, the insulator, the conducting wire and the like become an obstacle at the time of joining, and work efficiency is deteriorated.

An exemplary motor of the present disclosure includes: a shaft that is disposed along a central axis extending vertically and rotates around the central axis; a rotor that is secured to the shaft and rotates together with the shaft; and a stator that is disposed to oppose the rotor in a radial direction. The stator includes a ring-shaped stator core that includes a plurality of split stator cores joined to each other in a peripheral direction, a plurality of teeth that extend in the radial direction from the respective split stator cores, and a plurality of coils that are formed by winding a conducting wire around each of the plurality of teeth. Electronic components are disposed below the stator in an axial direction. At least a part of each electronic component overlaps the stator core in the axial direction. When viewed in the axial direction, joining portions where the split stator cores arranged in the peripheral direction are joined and the electronic components are displaced in the peripheral direction.

The above and other elements, features, steps, characteristics and advantages of the present disclosure will become more apparent from the following detailed description of the preferred embodiments with reference to the attached drawings.

### BRIEF DESCRIPTION OF THE DRAWINGS

according to an embodiment;
Fig. 2 is a perspective view of a blower according to an embodiment;
Fig. 3 is a vertical sectional view of the blower shown in Fig. 2;
Fig. 4 is an exploded perspective view of the blower shown in Fig. 2;
Fig. 5 is a perspective view of an upper motor housing and a stator core as viewed from therebelow;
Fig. 6 is a bottom view of the upper motor housing and the stator core;
Fig. 7 is a perspective view of a lower motor housing;
Fig. 8 is a plan view of the lower motor housing;
Fig. 9 is an enlarged sectional view of a motor housing inlet; and
Fig. 10 is a bottom view of a motor and an upper motor housing according to another embodiment of the present disclosure.

### DETAILED DESCRIPTION OF THE PREFERRED EMBODIMENTS

Exemplary embodiments of the present disclosure are described in detail below with reference to the drawings. In the description, in a blower A, a direction parallel to a central axis C of the blower A is an "axial direction", a direction orthogonal to the central axis C of the blower A is a "radial direction", and a direction along an arc around the central axis C of the blower A is a "peripheral direction". In the present description, in the blower A, the shape of each portion and positional relationships between the portions are described with the axial direction being a vertical direction and a side of an intake opening 43 of an impeller cover 41 with respect to an impeller 20 being an upper side. The term "vertical direction" is a name that is used simply for description, and does not limit the positional relationships and directions in the state of use of the blower A. "Upstream" and "downstream" refer to upstream and downstream, respectively, in a direction of circulation of an airflow S that is generated when the impeller 20 is rotated.

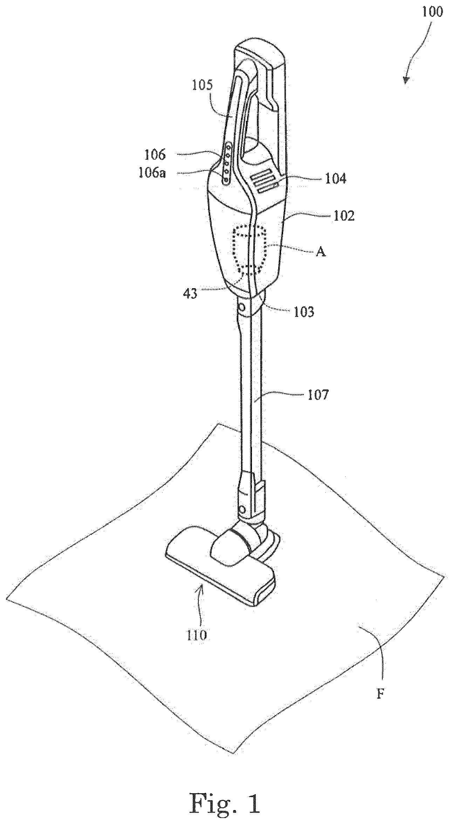

In the present description, in a vacuum cleaner 100, the shape of each portion and positional relationships between the portions are described with a direction towards a floor F (cleaning surface to be cleaned) in Fig. 1 being a "lower side", and a direction away from the floor F being an "upper side" . These directions are names that are used simply for description, and do not limit the positional relationships and directions in the state of use of the vacuum cleaner 100. "Upstream" and "downstream" refer to upstream and downstream, respectively, in a direction of circulation of air sucked in from an intake portion 103 when the blower A is driven.

An exemplary vacuum cleaner 100 of an embodiment of the present disclosure is described below. Fig. 1 is a perspective view of the vacuum cleaner 100 according to the embodiment. The vacuum cleaner 100 is a so-called stick-type electric vacuum cleaner, and includes a casing 102 including an intake portion 103 and an exhaust portion 104 provided in a lower surface and an upper surface of the casing 102, respectively. A power supply cord (not shown) is led out from a back surface of the casing 102. The power supply cord is connected to a power supply socket (not shown) in, for example, a side wall of a living room to supply electrical power to the vacuum cleaner 100. The vacuum cleaner 100 may be a so-called robot-type electric vacuum cleaner, a canister-type electric vacuum cleaner, or a handy-type electric vacuum cleaner.

An air path (not shown) that connects the intake portion 103 and the exhaust portion 104 is formed in the casing 102. A dust collecting portion (not shown), a filter (not shown), and the blower A are disposed in this order in the inside of the air path from the upstream side towards the downstream side. Dirt, such as dust, contained in air that circulates in the inside of the air path is intercepted by the filter, and is collected in the inside of the dust collecting portion having the form of a container. The dust collecting portion and the filter are formed so as to be removable from the casing 102.

A holding portion 105 and an operating portion 106 are provided at an upper portion of the casing 102. A user can hold the holding portion 105 and move the vacuum cleaner 100. The operating portion 106 includes a plurality of buttons 106a. The vacuum cleaner 100 is operated and set by operating the buttons 106a. For example, by operating the buttons 106a, instructions are given to, for example, start driving the blower A, stop driving the blower A, or change the rotation speed of the blower A. A cylindrical suction tube 107 is connected to the intake portion 103. A suction nozzle 110 is mounted on an upstream end (lower end in the figure) of the suction tube 107 so as to be removable from the suction tube 107.

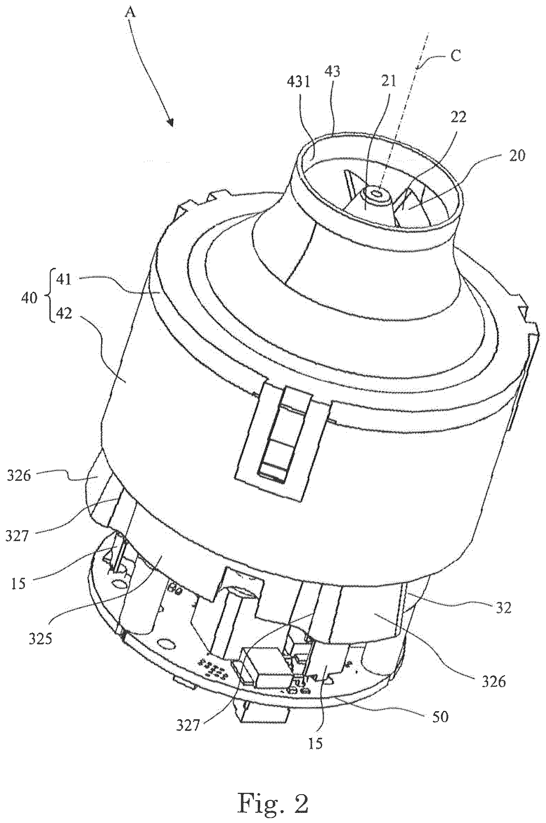

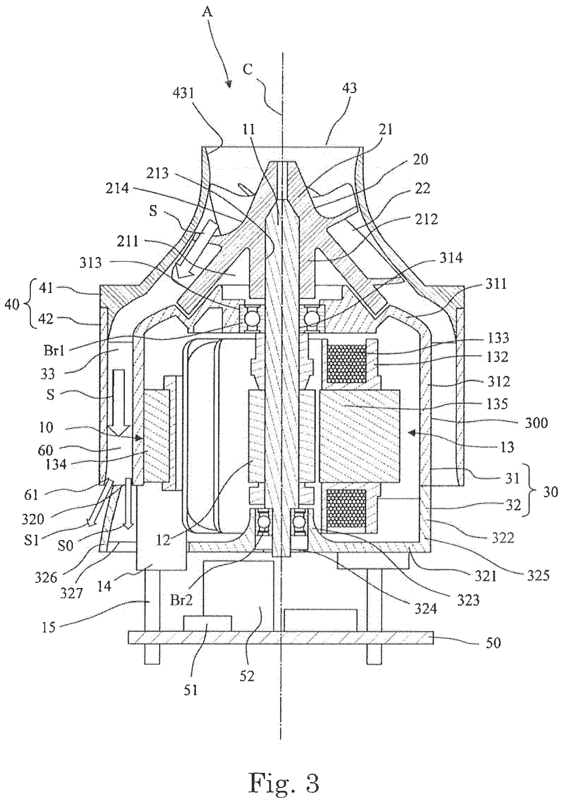

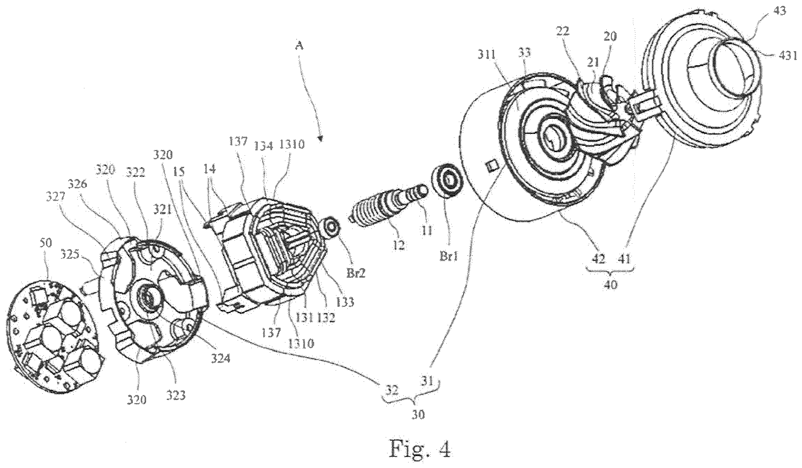

Fig. 2 is a perspective view of the blower according to the embodiment. Fig. 3 is a vertical sectional view of the blower shown in Fig. 2. Fig. 4 is an exploded perspective view of the blower shown in Fig. 2. The blower A is mounted on the vacuum cleaner 100 and sucks air.

The blower A includes a motor 10, an impeller 20, a motor housing 30, a blower housing 40, and a circuit board 50. In the blower A, the impeller 20 and the motor housing 30 are accommodated in the blower housing 40. As shown in Fig. 3, a channel 60 is formed in a gap between the blower housing 40 and an upper motor housing 31 (described later) of the motor housing 30. An upper end (upstream end) of the channel 60 is connected to an impeller cover 41 (described below) . An exhaust portion 61 is formed at a lower end (downstream end) of the channel 60.

The motor 10 is accommodated in the motor housing 30. The impeller 20 rotates around a central axis C extending vertically. The motor 10 is disposed below the impeller 20, and rotates the impeller 20. The rotation of the motor 10 causes the impeller 20 to rotate around the central axis C, so that airflow S is generated. The airflow S that is generated by the rotation of the impeller 20 is discharged from the exhaust portion 61 via the channel 60. As shown in Fig. 3, the motor 10 accommodated in the motor housing 30 is disposed below the impeller 20. In the description below, airflow that flows through the channel 60 is also called the airflow S.

The motor 10 is a so-called inner-rotor-type motor. The motor 10 includes a shaft 11, a rotor 12, and a stator 13.

The shaft 11 has a circular columnar shape. The shaft 11 is disposed along the central axis C. As shown in Fig. 3, the shaft 11 extends through an upper axial hole 314 in an upper housing top plate portion 311 (described later) of the upper motor housing 31. The impeller 20 is secured to an end portion of the shaft 11 that protrudes from the upper housing top plate portion 311. The shaft 11 is rotatably supported by an upper bearing Br1 and a lower bearing Br2. That is, the shaft 11 is disposed along the central axis C extending vertically and rotates around the central axis C.

The upper bearing Br1 and the lower bearing Br2 are ball bearings. The shaft 11 is secured to an inner ring of the upper bearing Br1 and an inner ring of the lower bearing Br2. Examples of securing methods that are used include a bonding-and-insertion method and a press-fitting method. An outer ring of the upper bearing Br1 is secured to the upper motor housing 31, and an outer ring of the lower bearing Br2 is secured to a lower motor housing 32. The upper bearing Br1 and the lower bearing Br2 are not limited to ball bearings.

The rotor 12 is secured to the shaft 11. The rotor 12 rotates together with the shaft 11. That is, the rotor 12 is secured to the shaft 11, and rotates together with the shaft 11. The rotor 12 includes a plurality of magnets (not shown). The plurality of magnets are secured to an outer peripheral surface of the shaft 11. The plurality of magnets are such that N-pole magnetic pole surfaces and S-pole magnetic pole surfaces are alternately arranged side by side.

Instead of the plurality of magnets, a single ring-shaped magnet may be used. In this case, the magnet may be alternately magnetized at an N pole and an S pole in the peripheral direction. The magnet may be integrally molded out of resin mixed with magnetic powder.

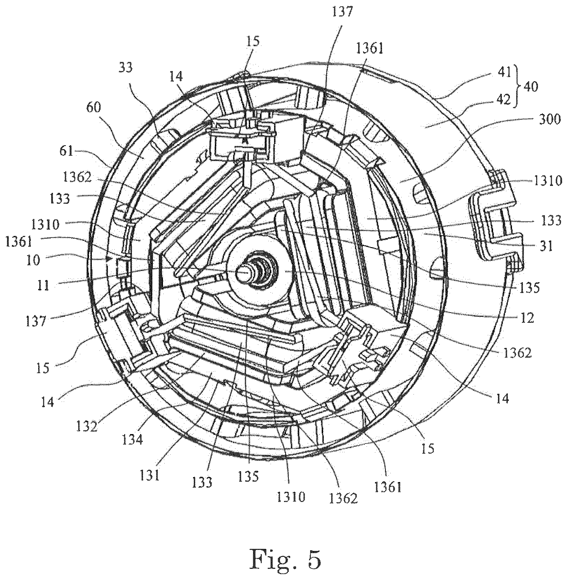

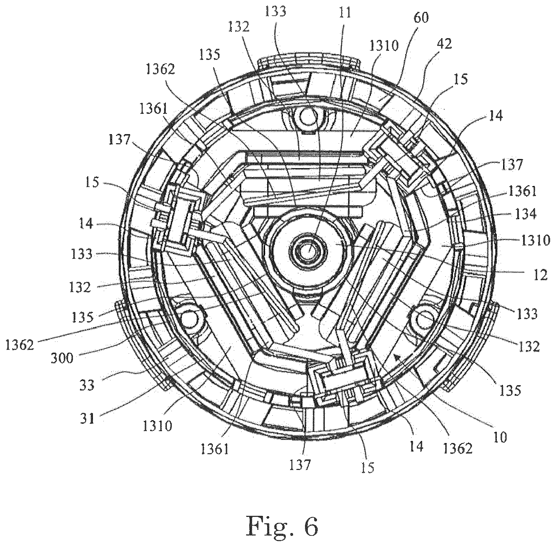

Fig. 5 is a perspective view of the motor and the upper motor housing as viewed from therebelow. Fig. 6 is a bottom view of the motor and the upper motor housing. In the motor 10, the stator 13 is disposed on an outer side of the rotor 12 in the radial direction. That is, the stator 13 is disposed to oppose the rotor 12 in the radial direction. The rotor 12 is disposed on an inner side of the stator 13 in the radial direction. That is, the motor 10 is an inner-rotor-type motor. The stator 13 includes a stator core 131, an insulator 132, and coils 133. The stator core 131 is a laminated body formed from electromagnetic steel plates that are laminated in the axial direction (the vertical direction in Fig. 3) . The stator core 131 is not limited to a laminated body formed from electromagnetic steel plates that are laminated, and may be, for example, a single member formed by, for example, casting or firing powder.

The ring-shaped stator core 131 includes a ring-shaped core back 134 and a plurality of (here, three) teeth 135. The ring-shaped stator core 131 includes a plurality of (here, three) split stator cores 1310. Split stator cores 1310 that are adjacent to each other in the peripheral direction are joined to each other at corresponding joining portions 137, and the ring-shaped stator core 131 is formed. That is, the ring-shaped stator core 131 corresponds to the plurality of split stator cores 1310 joined to each other in the peripheral direction. The method of joining the split stator cores 1310 at the corresponding joining portions 137 may be, for example, welding or bonding. However, the method is not limited thereto. It is possible to widely use methods that allow split stator cores 1310 that are adjacent to each other in the peripheral direction to be firmly joined to each other.

The split stator cores 1310 have the same shape. One tooth 135 is provided on each split stator core 1310. That is, the plurality of teeth 135 extend in the radial direction from the respective split stator cores 1310. When the split stator cores 1310 are disposed side by side in the peripheral direction and joined to each other, the teeth 135 are formed in a radial manner so as to extend inward in the radial direction from an inner peripheral surface of the core back 134 towards the rotor 12. This causes the plurality of teeth 135 to be disposed in the peripheral direction.

The coils 133 are formed by winding conducting wires around the teeth 135 via an insulator 132. That is, the plurality of coils 133 are formed by winding conducting wires around the plurality of teeth 135. Each coil 133 is formed by winding one continuous conducting wire having a winding starting end portion and a winding ending end portion. In the description below, each winding starting end portion is defined as a winding starting conducting wire 1361 and each winding ending end portion is defined as a winding ending conducting wire 1362. In addition, in the motor 10, the winding starting conducting wire 1361 of a coil 133 and the winding ending conducting wire 1362 of an adjacent coil 133 are connected to each other.

For example, when the three coils 133 are a U-phase coil, a V-phase coil, and a W-phase coil, the winding ending conducting wire 1362 of the U-phase coil and the winding starting conducting wire 1361 of the V-phase coil are connected to each other, the winding ending conducting wire 1362 of the V-phase coil and the winding starting conducting wire 1361 of the W-phase coil are connected to each other, and the winding ending conducting wire 1362 of the W-phase coil and the winding starting conducting wire 1361 of the U-phase coil are connected to each other. That is, in the motor 10, the three coils 133 are connected to each other by delta connection. That is, the plurality of coils 133 are connected to each other by delta connection. In the motor 10, by connecting the three coils 133 by delta connection, wiring is facilitated, so that it is possible to correspondingly improve work efficiency.

In the stator core 131, the inner peripheral surface and an outer peripheral surface of the core back 134, that is, a core-back portion of each split stator core 1310 is a planar surface in the vicinity of the root of each tooth 135. This makes it possible to effectively use a winding space. By shortening a magnetic path, it is possible to reduce loss. It is possible to prevent winding collapse of the coils 133 while preventing disturbance in a magnetic distribution. The inner peripheral surface and the outer peripheral surface of the core back 134 are curved surfaces in the stator core 131 other than at the vicinity of the root of each tooth 135.

As described above, in the motor 10, the winding starting conducting wire 1361 of a coil 133 and the winding ending conducting wire 1362 of an adjacent coil 133 in the peripheral direction are connected to each other. The motor 10 is a brushless motor. A brushless motor is driven by electrical current divided into three phases in which supply timings differ. A voltage is applied to and electrical current is caused to flow at a location between two of three connection points where adjacent coils 133 are connected to each other. By successively changing two connection points, the coils 133 and the magnets (not shown) of the rotor 12 attract or repel each other. This causes the rotor 12 to rotate.

The motor 10 is, for example, a high-speed rotation type motor rotatable at, for example, a rotation speed greater than or equal to 100,000 rotations per minute. Ordinarily, in order for the motor 10 to rotate at a high speed, it is advantageous for the motor 10 to have a smaller number of coils 133. The motor 10 is controlled by using the three-phase electrical current. Therefore, in the motor 10, the number of coils 133 and the number of teeth 135, where the coils 133 are disposed, are three each. That is, the motor 10 is a three-phase, three-slot motor.

The motor 10 includes holder portions 14 and terminals 15. The terminals 15 are examples of electronic components. The terminals 15 are electrically conductive. In the motor 10, the plurality of terminals 15 are each connected to the winding starting conducting wire 1361 of a coil 133 and the winding ending conducting wire 1362 of an adjacent coil 133. That is, in the embodiment, electronic components are the terminals 15 connected to the coils 133. Even in the case where the electronic components are the terminals 15, since the arrangement of the electronic components (terminals 15) and the joining portions 137 is displaced in the peripheral direction as described below, work efficiency in manufacturing the motor 10 is improved. Each terminal 15 extends downward in the axial direction. The terminals 15 are disposed below the stator 13, that is, the stator core 131 in the axial direction. That is, the electronic components (the terminals 15) are disposed below the stator 13 in the axial direction.

The holder portions 14 are insulating box bodies. The terminals 15 are disposed in the corresponding holder portions 14. That is, the electronic components (the terminals 15) are accommodated in the insulating holder portions 14. Thus, it is possible to electrically insulate the electronic components (the terminals 15) from other conductive components. The holder portions 14 extend downward in the axial direction, and protrude below the lower motor housing 32 (described later) of the motor housing 30 in the axial direction. The terminals 15 disposed in the corresponding holder portions 14 protrude further below lower ends of the corresponding holder portions 14 in the axial direction. The terminals 15 are connected to the circuit board 50 disposed below the lower motor housing 32 in the axial direction. The holder portions 14 and the insulator 132 may be an integrally molded body molded out of the same material. Alternatively, the holder portions 14 may be formed of a material differing from that of the insulator 132.

The holder portions 14 hold the winding starting conducting wires 1361 and the winding ending conducting wires 1362. In each holder portion 14, the winding starting conducting wire 1361 and the winding ending conducting wire 1362, held by the holder portion 14, and the terminal 15 are connected to each other. The terminals 15, the winding starting conducting wires 1361, and the winding ending conducting wires 1362 may be electrically connected to each other by using a fastening member, such as a screw, or may be fixed to each other by a fixing method such as soldering. It is possible to, by using the terminals 15 and the holder portions 14 with the winding starting conducting wires 1361 and the winding ending conducting wires 1362 disposed therebetween, hold the winding starting conducting wires 1361 and the winding ending conducting wires 1362 by the corresponding holder portions 14 and electrically connect them to the terminals 15. In the embodiment, the holder portions 14 are an integrally molded body with the insulator 132.

As shown in Figs. 5 and 6, the holder portions 14 and the terminals 15 have portions that overlap the core back 134 in the axial direction. That is, at least a part of each electronic component (terminal 15) overlaps the stator core 131 in the axial direction. The holder portions 14 and the terminals 15 are disposed at equal intervals in the peripheral direction. That is, the terminals 15 are disposed at equal intervals in the peripheral direction. Due to such an arrangement of the terminals 15, it is possible to easily route the winding starting conducting wires 1361 and the winding ending conducting wires 1362, so that work efficiency is improved. As shown in Figs. 5 and 6, when the motor 10 is viewed in the axial direction, the holder portions 14 and the terminals 15 are displaced in the peripheral direction from the joining portions 137 where split stator cores 1310 that are adjacent to each other in the peripheral direction are joined. That is, when viewed in the axial direction, the joining portions 137 where the split stator cores 1310 arranged in the peripheral direction are joined and the electronic components (the terminals 15) are displaced in the peripheral direction. This causes the joining portions 137 not to overlap the electronic components (the terminals 15) in the axial direction in connecting the split stator cores 1310, so that the electronic components (the terminals 15) do not become an obstacle at the time of connecting the split stator cores 1310. Therefore, work efficiency in manufacturing the motor 10 is improved.

The expression "the holder portions 14 are displaced in the peripheral direction from the joining portions 137" includes a case in which the holder portions 14 and the joining portions 137 exist at different positions in the peripheral direction on the same circumference (cylinder) having the central axis as the center, but is not limited thereto. For example, the expression may also include a case in which the holder portions 14 and the joining portions 137 are disposed on concentric circles having different diameters, and exist at different positions in the peripheral direction. The holder portions 14 and the terminals 15 are disposed between the teeth 135 and the joining portions 137 in the peripheral direction. That is, the terminals 15 are disposed between the joining portions 137 and the teeth 135 in the peripheral direction. Due to such an arrangement, since portions of the circuit board 50 that are connected to the terminals 15 are appropriately adjustable, the electronic components are provided on the circuit board 50 with greater freedom.

Here, the manufacturing of the stator 13 is described. For example, when the split stator cores 1310 are previously joined to each other in the peripheral direction and the ring-shaped stator core 131 is formed, work efficiency for winding the conducting wires around the teeth 135 protruding into the core back 134 is poor. Therefore, in the stator 13, prior to joining the split stator cores 1310, the insulator 132 is mounted on the teeth 135. At this time, the holder portions 14 of an integrally molded body with the insulator 132 are disposed at positions that overlap in the axial direction areas on one side of the split stator cores 1310 in the axial direction. At this time, the terminals 15 are provided in the holder portions 14.

On an outer side of the insulator 132, the conducting wires are wound around the teeth 135 protruding from the split stator cores 1310. The coils 133 are disposed for the corresponding split stator cores 1310. The split stator cores 1310 on which the coils 133 are mounted are joined at the joining portions 137 with the teeth 135 being disposed inwardly in the radial direction and side by side in the peripheral direction. At this time, since the holder portions 14 and the joining portions 137 are displaced from each other in the peripheral direction, when the joining is performed at the joining portions 137, the joining portions 137 are easily accessible by, for example, a tool or a jig, so that the joining at the joining portions 137 is facilitated. That is, it is possible to increase the work efficiency for joining the split stator cores 1310.

The stator core 131 where the split stator cores 1310 have been joined at the joining portions 137 has its curved portion brought into contact with an inner surface of the upper motor housing 31. At this time, the curved portion may be press-fitted to the inner surface of the upper motor housing 31. The press-fitting may be a so-called interference fitting, or light press-fitting (a so-called transition fit) whose press-fitting force is weaker than that in the interference fitting. The core back 134 may have a cylindrical shape without including a planar surface. In this case, a cylindrical outer surface is press-fitted to the upper motor housing 31. The core back 134 and the upper motor housing 31 may be secured to each other by using other methods such as an insertion-and-bonding method.

As described above, the motor 10 is, for example, a high-speed rotation type motor rotatable at a rotation speed greater than or equal to 100, 000 rotations per minute. Therefore, in order to achieve a balanced rotation of the rotor 12, the teeth 135 are disposed at equal intervals in the peripheral direction. In the motor 10, the coils 133 are formed before joining the split stator cores 1310. As shown in Fig. 6, the split stator cores 1310 have the same shape. The teeth 135 protrude from the center of the core back portion in the split stator cores 1310 in the peripheral direction. When the split stator cores 1310 formed in this way are disposed side by side in the peripheral direction and joined at the joining portions 137, the teeth 135 are disposed at equal intervals in the peripheral direction.

The split stator cores 1310 have shapes that are in line symmetry with the teeth 135 interposed therebetween. Therefore, when the split stator cores 1310 are disposed side by side in the peripheral direction and joined to each other, the joining portions 137 are disposed at the center of adjacent teeth 135 in the peripheral direction. That is, the joining portions 137 where split stator cores 1310 that are adjacent to each other in the peripheral direction are joined to each other are disposed at the center in the peripheral direction between teeth 135 adjacent to each other in the peripheral direction. By virtue of such a structure, the distances in the peripheral direction of the joining portions 137 from the teeth 135 become equal to each other, and space that is usable for the joining operation can be wide. Therefore, it is possible to increase the work efficiency for joining the split stator cores 1310.

Since the lengths on both sides of the split stator cores 1310 in the peripheral direction with the teeth 135 interposed therebetween become equal to each other, it is possible suppress a reduction in the magnetic characteristics of the core back 134, that is, the stator core 131.

The motor housing 30 includes the upper motor housing 31 and the lower motor housing 32.

As shown in, for example, Figs. 3 and 4, the upper motor housing 31 includes the upper housing top plate portion 311 and an upper housing cylindrical portion 312. The upper housing top plate portion 311 extends in a direction orthogonal to the central axis C. The upper housing top plate portion 311 has a circular shape when viewed in the axial direction. The upper housing cylindrical portion 312 extends downward in the axial direction from an outer edge of the upper housing top plate portion 311 in the radial direction. The upper housing top plate portion 311 and the upper housing cylindrical portion 312 are an integrally molded body. The upper housing cylindrical portion 312 of the upper motor housing 31 is disposed on an outer side of a part of the shaft 11, the rotor 12, and the stator 13 in the radial direction.

The motor housing 30 may be made of, for example, a metal or a resin. When the motor housing 30 is made of a metal, it is possible to increase the strength of the motor housing 30. In addition, it is possible to efficiently dissipate heat transmitted to the motor housing 30. Further, when the upper motor housing 31 is made of a metal, the metal of the upper motor housing 31 may be, for example, an aluminum alloy or a magnesium alloy. Aluminum alloy and magnesium alloy are easier to mold, are lighter, and are less expensive than other metals.

As shown in Fig. 3, a lower surface of the upper housing top plate portion 311 opposes the rotor 12 and the stator 13 of the motor 10 in the axial direction. The upper housing top plate portion 311 includes an upper bearing holding portion 313 and an upper axial hole 314. The upper bearing holding portion 313 includes a recessed portion whose upper side is recessed and that is disposed at a central portion of the lower surface of the upper housing top plate portion 311. The upper axial hole 314 extends in the axial direction. The outer ring of the upper bearing Br1 is secured to the upper bearing holding portion 313. The shaft 11 extends through the upper axial hole 314. A central axis of the upper bearing holding portion 313 and a central axis of the upper axial hole 314 coincide with each other.

The upper housing cylindrical portion 312 has a cylindrical shape. An upper end portion of the upper housing cylindrical portion 312 in the axial direction is connected to the upper housing top plate portion 311. The stator core 131 is press-fitted to an inner peripheral surface of the upper housing cylindrical portion 312. As described above, since the upper housing cylindrical portion 312 and the upper housing top plate portion 311 are an integrally molded body, heat transmitted from the stator core 131 to the upper housing cylindrical portion 312 is also transmitted to the upper housing top plate portion 311. Therefore, the heat of the stator 13 is efficiently discharged to the outside via the upper motor housing 31.

A plurality of stationary blades 33 are provided at an outer peripheral surface 300 of the upper housing cylindrical portion 312. The stationary blades 33 contact the upper housing cylindrical portion 312. That is, the plurality of stationary blades 33 are disposed closer to an outer side in the radial direction than an outer surface of the upper motor housing 31 in the radial direction, and closer to an inner side in the radial direction than an inner surface of the blower housing 40 (a lower cover 42) in the radial direction. The plurality of stationary blades 33 contact at least the outer surface of the upper motor housing 31 in the radial direction. The plurality of stationary blades 33 are disposed at equal intervals in the peripheral direction at the outer surface of the upper motor housing 31 in the radial direction.

When the stationary blades 33 and the upper motor housing 31 are said to contact each other, this may mean not only that different members contact each other but also that they are integrally molded with each other. In the embodiment, the stationary blades 33 are formed from the same member as the upper housing cylindrical portion 312. Although, in the embodiment, the stationary blades 33 and the upper housing cylindrical portion 312 are an integrated member, the stationary blades 33 may be formed from a member that differs from that from which the upper housing cylindrical portion 312 is formed. When the stationary blades 33 and the upper housing cylindrical portion 312 are formed from the same member, it is easier to assemble the blower A.

Each stationary blade 33 has a plate shape, and is inclined in a direction opposite to the direction of rotation of the impeller 20 as each stationary blade 33 extends upward. An impeller 20 side of each stationary blade 33 is curved in a convex shape. Outer edges of the plurality of stationary blades 33 contact the blower housing 40, that is, an inner surface of the lower cover 42. The stationary blades 33 are disposed in parallel in the peripheral direction, and guide the airflow S to the lower side when driving the blower A. The stationary blades 33 are disposed in the channel 60, and rectify the airflow S that flows in the channel 60.

The stationary blades 33 are disposed at equal intervals in the peripheral direction at the outer surface of the upper motor housing 31 in the radial direction. This makes it possible to bring the airflow S closer to a state in which the airflow S is symmetrical with respect to an axis at the outer surface of the upper motor housing 31 in the radial direction, and to bring the cooling characteristics of the upper motor housing 31 closer to a state in which the cooling characteristics are uniform in the peripheral direction.

When the motor 10 rotates, the coils 133 and portions in the vicinity thereof generate heat. This heat is transmitted to the upper motor housing 31. The stationary blades 33 that protrude outward are provided at the outer peripheral surface 300 of the upper motor housing 31, and are disposed in the channel 60. Therefore, the stationary blades 33 rectify the airflow S, and serve as heat-dissipatinq fins that allow the heat of the upper motor housing 31 to escape to the outside. This makes it possible to efficiently cool the upper motor housing 31 that has been made hot by the heat of the stator 13.

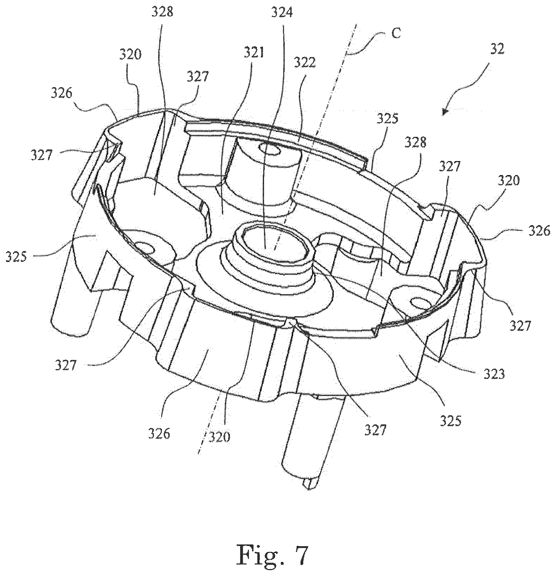

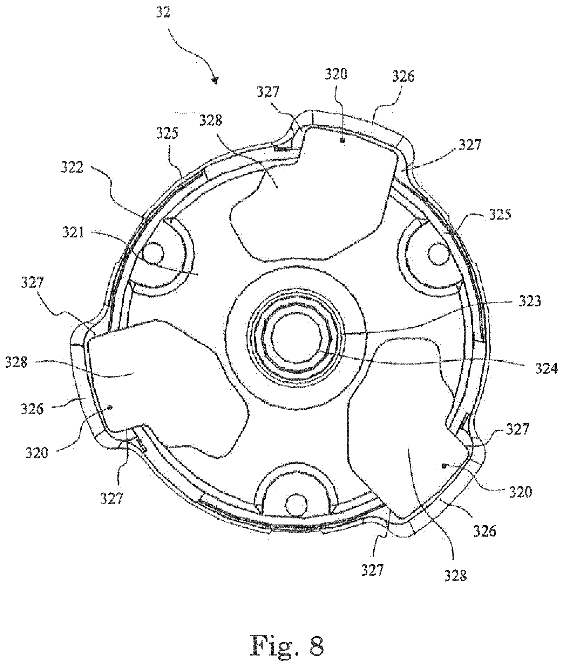

The lower motor housing 32 is provided below the upper motor housing 31 in the axial direction. Fig. 7 is a perspective view of the lower motor housing. Fig. 8 is a plan view of the lower motor housing.

The lower motor housing 32 includes a lower housing bottom portion 321 and a lower housing cylindrical portion 322. The lower housing bottom portion 321 has the shape of a plate that extends in a direction orthogonal to the central axis C. The lower housing cylindrical portion 322 is a cylindrical body that extends in the axial direction. The lower housing bottom portion 321 is integrally connected to a lower end portion of the lower housing cylindrical portion 322 in the axial direction.

The lower housing bottom portion 321 includes a lower bearing holding portion 323 and a lower axial hole 324. The lower bearing holding portion 323 protrudes upward in the radial direction from a central portion of the lower housing bottom portion 321, and includes a recessed portion where the central portion is recessed downward. The outer ring of the lower bearing Br2 is secured to the recessed portion of the lower bearing holding portion 323. The lower axial hole 324 is a through hole that extends in the axial direction through the central portion of the lower housing bottom portion 321. The shaft 11 extends through the lower axial hole 324. A central axis of the lower bearing holding portion 323 and a central axis of the lower axial hole 324 coincide with each other.

The lower motor housing 32 is mounted on the lower side of the upper motor housing 31. That is, an upper end portion of the lower housing cylindrical portion 322 in the axial direction contacts a lower end portion of the upper housing cylindrical portion 312 of the upper motor housing 31 in the axial direction. This causes at least a part of a lower surface of the upper motor housing 31 to be covered by the lower motor housing 32. The lower motor housing 32 is secured to the upper motor housing 31 by using a fastener, such as a screw. The upper motor housing 31 and the lower motor housing 32 may be made of the same material or different materials.

As shown in Figs. 7 and 8, the lower housing cylindrical portion 322 includes lower-housing small diameter portions 325, lower-housing large diameter portions 326, and lower-housing connection portions 327. Each lower-housing small diameter portion 325 has a cylindrical shape whose center of curvature coincides with the central axis C. Each lower-housing large diameter portion 326 has a cylindrical shape having a diameter that is larger than that of the lower-housing small diameter portion 325. Each lower-housing large diameter portion 326 has a cylindrical shape whose center of curvature coincides with the central axis C. That is, the lower-housing small diameter portions 325 and the lower-housing large diameter portions 326 have curved surfaces having the same center of curvature.

The lower housing cylindrical portion 322 includes three lower-housing small diameter portions 325 and three lower-housing large diameter portions 326. The lower-housing small diameter portions 325 and the lower-housing large diameter portions 326 are alternately disposed in the peripheral direction. The lower-housing small diameter portions 325 and the lower-housing large diameter portions 326 that are adjacent to each other in the peripheral direction are connected to each other at the corresponding lower-housing connection portions 327.

The lower housing bottom portion 321 includes terminal through holes 328 extending therethrough in the axial direction. Each terminal through hole 328 includes a portion on an inner side in the radial direction of the lower-housing large diameter portions 326 and the lower-housing connection portions 327. The holder portions 14 and the terminals 15 are disposed on the inner side of the lower-housing large diameter portions 326 and the lower-housing connection portions 327. The holder portions 14 and the terminals 15 extend through the terminal through holes 328 and protrude below the lower motor housing 32 in the axial direction.

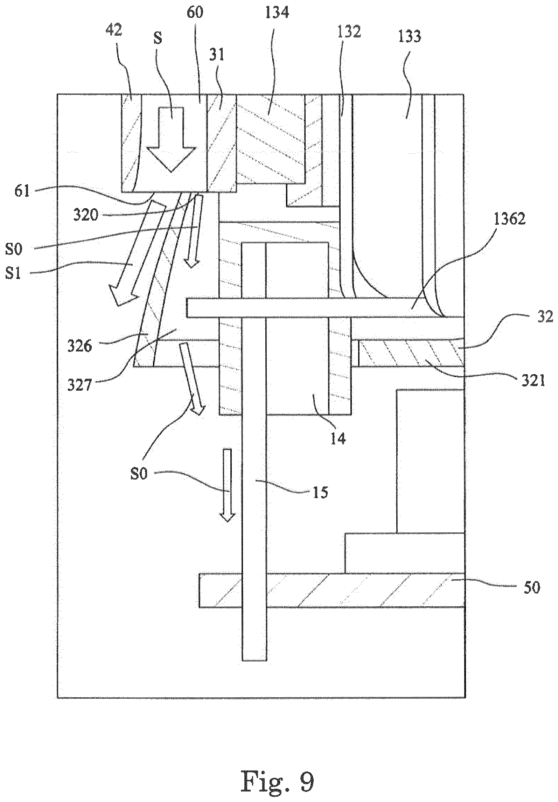

Next, the securing of the lower motor housing 32 to the upper motor housing 31 is described. Fig. 9 is an enlarged sectional view of a motor housing inlet. When the upper motor housing 31 and the lower motor housing 32 are secured to each other, the upper bearing Br1 that rotatably supports the upper side of the shaft 11 is held by the upper bearing holding portion 313, and the lower bearing Br2 that rotatably supports the lower side of the shaft 11 is held by the lower bearing holding portion 323. Therefore, the shaft 11 and the rotor 12 secured to the shaft 11 are rotatably supported by the motor housing 30 via the upper bearing Br1 and the lower bearing Br2. Although the upper motor housing 31 and the lower motor housing 32 may be secured to each other by, for example, using a screw, the method of securing them is not limited thereto. Other methods that allow the upper motor housing 31 and the lower motor housing 32 to be firmly secured to each other, such as bonding and securing using friction, may also be used.

The outside diameter of an outer surface of each lower-housing small diameter portion 325 in the radial direction is the same or substantially the same as that of an outer surface of the upper housing cylindrical portion 312 in the radial direction. When an upper end of the lower motor housing 32 in the axial direction is secured to a lower end of the upper motor housing 31 in the axial direction, the lower-housing small diameter portions 325 overlap the upper housing cylindrical portion 312 in the axial direction. That is, the outer surface of the upper housing cylindrical portion 312 and the outer surfaces of the lower-housing small diameter portions 325 form smooth or substantially smooth curved surfaces. The upper end portions of the lower-housing large diameter portions 326 are disposed closer to the outer side in the radial direction than the upper housing cylindrical portion 312 and are disposed on the inner side of the lower cover 42 of the blower housing 40 in the radial direction (see Figs. 3 and 9).

When viewed in the axial direction, in a portion of the lower motor housing 32 including the lower-housing large diameter portions 326, the lower-housing large diameter portions 326 and the lower-housing connection portions 327 are disposed in a gap between the motor housing 30 and the blower housing 40 in the radial direction. A portion surrounded by upper ends of the lower-housing large diameter portions 326 and upper ends of the lower-housing connection portions 327 in the axial direction and by the lower end portion of the upper housing cylindrical portion 312 allows an inner side and an outer side of the lower motor housing 32 to communicate with each other. That is, an inner side in the radial direction of a portion surrounded by the lower-housing large diameter portions 326 and the lower-housing connection portions 327 corresponds to motor housing inlets 320.

That is, a part of the airflow S flowing through the channel 60 flows into the motor housing 30 as inflow airflow S0 from the motor housing inlets 320, and the rest is blown to the outside as blowout airflow S1. As shown in Figs. 7 and 8, a width of the lower-housing large diameter portion 326 in the peripheral direction is narrower than that of the lower-housing small diameter portion 325. Therefore, the inflow airflow S0 flowing in from the motor housing inlets 320 is smaller than the airflow S1 flowing out to the outside.

Next, the impeller 20 is described. The impeller 20 is a so-called diagonal-flow impeller formed of a resin molded article, and includes a hub portion 21 and a plurality of blades 22. The impeller 20 is made of a resin called engineering plastic. Engineering plastic is a resin having mechanical characteristics, such as strength and heat resistance, that are better than those of other resins. The impeller 20 may be made of, for example, a metal. The diameter of the hub portion 21 increases towards the lower side. In other words, the impeller 20 includes the hub portion 21 whose diameter increases towards the lower side. That is, the diameter of the hub portion 21 gradually increases towards the lower side.

The hub portion 21 includes a lower recessed portion 211 and a boss portion 212. A hole portion 213 to which the shaft 11 of the motor 10 is press-fitted is provided at the center of the boss portion 212 (on the central axis C). Therefore, the boss portion 212 and the shaft 11 are connected to each other, and the impeller 20 rotates around the central axis C as a center. That is, when the impeller 20 is secured to the shaft 11 and the motor 10 is driven, the impeller 20 rotates together with the shaft 11. When the impeller 20 rotates, the airflow S is generated.

The plurality of blades 22 are provided in parallel in the peripheral direction on an outer surface 214 of the hub portion 21. In the embodiment, the blades 22 are provided in parallel on the outer surface 214 of the hub portion 21 at predetermined intervals in the peripheral direction, and are integrally molded with the hub portion 21. An upper portion of each blade 22 is disposed forwardly of its lower portion in a rotation direction. That is, each blade 22 is inclined with respect to the central axis C.

Since the lower recessed portion 211 of the hub portion 21 of the impeller 20 is provided, it is possible to reduce the weight of the hub portion 21. When the impeller 20, which is a rotating portion, is lighter, it is possible to reduce power consumption, and to facilitate high-speed rotation. In addition, it is possible to suppress the occurrence of sink marks when the impeller 20 is being molded. Since a gap between a lower surface of the hub portion 21 in the axial direction and an upper surface of the motor housing 30 is narrow, the airflow S generated by the impeller 20 does not easily flow into a portion between the hub portion 21 and the motor housing 30. Therefore, it is possible to suppress a reduction in blowing efficiency.

Next, the blower housing 40 is described. The blower housing 40 surrounds an outer side of the upper motor housing 31 in the radial direction with a gap therebetween. The blower housing 40 includes the impeller cover 41 and the lower cover 42.

The impeller cover 41 is disposed on at least an outer side of the impeller 20 in the radial direction. The impeller cover 41 is a guide that directs the airflow S generated by the rotation of the impeller 20 in the axial direction. The impeller cover 41 includes the intake opening 43 that opens vertically (axial direction). The intake opening 43 has a bell mouth 431 bent inwardly and extending downward from an upper end thereof. This causes the diameter of the intake opening 43 to be smoothly reduced from the upper side towards the lower side. When, in the impeller cover 41, the intake opening 43 has the bell mouth 431, it is possible to smoothly suck in air. This increases the amount of air that is sucked in from the intake opening 43 when the impeller 20 rotates. Therefore, it is possible to increase the blowing efficiency of the blower A.

In the blower A of the embodiment, the impeller cover 41 is secured to the lower cover 42. In an exemplary securing method, for example, a protrusion may be provided on an outer surface of the lower cover 42 and the impeller cover 41 may be provided with a beam portion extending downward in the axial direction and having a recessed portion that is disposed in a front-end-side inner surface and that is recessed outward in the radial direction. When the impeller cover 41 is moved in the axial direction towards the lower cover 42, the beam portion is flexed and the protrusion of the lower cover 42 is inserted into the recessed portion of the beam portion of the impeller cover 41 to secure the impeller cover 41 to the lower cover 42. The securing method is not limited to this method. It is possible to widely use securing methods that make it possible to suppress movement in the axial direction and the peripheral direction. Desirably, they can be positioned in the peripheral direction and can be easily attached and detached.

The lower cover 42 is a cylindrical cover having a circular shape in cross section and extending in the axial direction. The lower cover 42 is disposed on the outer side of the upper motor housing 31 in the radial direction. That is, the blower housing 40 faces the outer surface of the motor housing 30 in the radial direction with a gap therebetween. In the embodiment, the blower housing 40 (the lower cover 42) is disposed apart from the outer side of the upper motor housing 31 in the radial direction with a gap therebetween. The plurality of stationary blades 33 are disposed side by side at equal intervals in the peripheral direction in the gap between the lower cover 42 and the upper motor housing 31.

The lower cover 42 includes openings in an upper end portion and a lower end portion thereof. The upper end portion of the lower cover 42 is connected to a lower end portion of the impeller cover 41. The lower end portion of the impeller cover 41 is inserted into the lower cover 42. An inner surface of the impeller cover 41 is smoothly, for example, differentiably continuous with the inner surface of the lower cover 42. Therefore, any disturbance in the airflow S is suppressed by making smooth the inner surface of the blower housing 40.

Although the upper motor housing 31 and the lower cover 42 may be an integrated molded body, the upper motor housing 31 and the lower cover 42 are not limited thereto. For example, the upper motor housing 31 and the lower cover 42 may be formed as separate members. When the lower cover 42 is formed separately from the upper motor housing 31, the impeller cover 41 and the lower cover 42 may be integrated with each other.

As shown in Figs. 3 and 4, the circuit board 50 is disposed below the lower motor housing 32, that is, the stator 13 in the axial direction. Circuits for driving the motor 10, such as a power supply circuit and a control circuit, are formed at the circuit board 50.

The circuit board 50 includes a printed circuit made by a metallic film. Electronic components that form, for example, a power supply circuit or a control circuit, are provided on the printed circuit. Examples of the electronic components that are mounted on the circuit board 50 may include field effect transistors (FETs 51) and electrolytic capacitors 52. Electronic components other than the FETs 51 and the electrolytic capacitors 52 are also provided in the printed circuit. Although the FETs 51 are used as transistors, the transistors are not limited thereto, so that, for example, bipolar transistors, IGBTs, or MOSFETs may also be used. Although the electrolytic capacitors 52 are used as capacitors, the capacitors are not limited thereto, so that, for example, ceramic capacitors or film capacitors may also be used.

As shown in Fig. 3, the electronic components, such as the FETs 51 and the electrolytic capacitors 52, are disposed on an upper surface of the circuit board 50 in the axial direction.

The blower A has the above-described structure. Next, the operation of the blower A is described. When electrical current is supplied to the coils 133 via the terminals 15, the motor 10 is driven. When the motor 10 is driven, the shaft 11 rotates, and the impeller 20 secured to the shaft 11 rotates. When the impeller 20 rotates, the airflow S is generated (see Fig. 3).

The airflow S generated by the rotation of the impeller 20 flows into the channel 60. The airflow S that has flown into the channel 60 is rectified by the stationary blades 33. The stationary blades 33 cause the airflow S to flow in a state closer to a state in which the airflow S is symmetrical with respect to an axis with the central axis C as the center. Then, the airflow S is blown out to the outside of the blower A from the exhaust portion 61.

As shown in Figs. 3 and 9, the upper end portion of the lower housing cylindrical portion 322, that is, the motor housing inlets 320 are disposed below the exhaust portion 61 in the axial direction. Therefore, the airflow S that is blown out from the exhaust portion 61 branches into the blowout airflow S1 that is blown out to the outside of the blower A and the inflow airflow S0 that flows into the lower motor housing 32 from the motor housing inlets 320.

The holder portions 14 and the terminals 15 are disposed closer to the inner side in the radial direction than an inner surface of each lower-housing large diameter portion 326 in the radial direction and an inner surface of each lower-housing connection portion 327 in the radial direction. Therefore, the inflow airflow S0 that has flown in from the motor housing inlets 320 flows along the holder portions 14 and the terminals 15. As described above, the terminals 15 are made of a metal and have the form of a flat plate, so that the contact area of each terminal 15 with the inflow airflow S0 is large. The terminals 15 contact the winding starting conducting wires 1361 and the winding ending conducting wires 1362 of the coils 133, each of which is a heat source of the motor 10. Therefore, heat generated by the coils 133 is transmitted to the terminals 15 via the winding starting conducting wires 1361 and the winding ending conducting wires 1362. The heat transmitted to the terminals 15 is taken away by the inflow airflow S0. That is, the heat generated by the coils 133 as a result of driving the motor 10 is transmitted to the terminals 15 via the winding starting conducting wires 1361 and the winding ending conducting wires 1362, and is discharged to the outside by the inflow airflow S0. Therefore, in the motor 10, it is possible to effectively discharge the heat generated by the coils 133 to the outside. This makes it possible to suppress a temperature rise of the motor 10 and to stably operate the motor 10.

The circuit board 50 is disposed below the lower motor housing 32 in the axial direction. Lower ends of the terminals 15 in the axial direction are connected to the circuit board 50. Therefore, the inflow airflow S0 that has flown in from the motor housing inlets 320 flows along the terminals 15, and a part thereof flows along the circuit board 50. Therefore, the inflow airflow S0 is blown against the electronic components (here, for example, the FETs 51 and the electrolytic capacitors 52) provided on the circuit board 50. Therefore, the inflow airflow S0 takes away the heat from, that is, cools the electronic components (here, for example, the FETs 51 and the electrolytic capacitors 52) provided on the circuit board 50.

The inflow airflow S0 is also blown against a wiring pattern that is formed on the circuit board 50, and the wiring pattern is also cooled. Since the electronic components are provided in the wiring pattern, cooling the wiring pattern also indirectly cools the electronic components. For example, when the circuit board 50 is a double-sided circuit board, cooling the wiring pattern on the upper surface by using the inflow airflow S0 also indirectly cools the electronic components provided on the lower surface.

The vacuum cleaner 100 includes the blower A. In the vacuum cleaner 100 having the above-described structure, when the motor 10 of the blower A is driven, the impeller 20 rotates around the central axis C as the center. That is, the blower A includes the impeller 20 and the motor 10. The impeller 20 is rotated by the motor 10. This makes it possible to realize the blower A including the motor 10 excellent in assembly work efficiency. Since the vacuum cleaner 100 includes the blower A, the blower A including the motor 10 excellent in assembly work efficiency can be used for the vacuum cleaner 100. When the vacuum cleaner 100 is driven, air containing dirt, such as dust on the floor F, circulates through the suction nozzle 110, the suction tube 107, the intake portion 103 (all of which are shown in Fig. 1), the dust collecting portion, and the filter in this order. Air that has passed through the filter is taken into the blower housing 40 via the intake opening 43 of the blower A. At this time, the amount of air that is sucked in from the intake opening 43 is increased by the bell mouth 431, and the air is smoothly guided to locations between adjacent blades 22. Therefore, it is possible to increase the blowing efficiency of the blower A. The vacuum cleaner 100 includes the blower A. Consequently, it is possible to realize a vacuum cleaner including the blower A capable of cooling the stator 13 without lowering the blowing efficiency.

The air that has been taken into the impeller cover 41 circulates between adjacent blades 22, and is accelerated

downward and further outward in the radial direction than the rotating impeller 20. The air accelerated downward on the outer side in the radial direction is blown out further downward than the impeller 20. The air (airflow S) blown out further downward than the impeller 20 flows into the channel 60 in the gap between the upper motor housing 31 and the lower cover 42. The air (airflow S) that has flown into the channel 60 circulates between adjacent stationary blades 33 in the peripheral direction.

The airflow S that has passed the lower ends of the stationary blades 33 is exhausted to the outside of the blower housing 40 via the exhaust portion 61. The airflow S exhausted to the outside of the blower housing 40 circulates in the air path in the inside of the casing 102 of the vacuum cleaner 100, and is exhausted to the outside of the casing 102 from the exhaust portion 104 (see Fig. 1). This allows the vacuum cleaner 100 to clean the floor F.

In the motor 10, when electrical current is supplied to the coils 133, the coils 133 and the stator core 131 generate heat. The airflow S generated at the impeller 20 flows to an outer surface of the upper housing cylindrical portion 312. The plurality of stationary blades 33 formed integrally with the outer surface of the upper housing cylindrical portion 312 are provided in the channel 60 where the airflow S flows. Therefore, the surface area that the airflow S contacts is increased, and heat-dissipating efficiency is increased. This makes it possible to reduce the temperature of the motor 10 and to suppress a reduction in the efficiency of the motor 10.

When the inflow airflow S0 that has flown in from the motor housing inlets 320 cools the terminals 15, the coils 133 that are connected to the terminals 15 via the winding starting conducting wires 1361 and the winding ending conducting wires 1362 are also cooled. This also makes it possible to suppress a reduction in the efficiency of the motor 10. Therefore, it is possible to suppress a reduction in the blowing efficiency of the blower A.

By efficiently cooling the circuit board 50, where circuits for driving the motor 10 are formed, and the electronic components, here, the FETs 51 and the electrolytic capacitors 52, provided on the circuit board 50, it is possible to stabilize the operation of the circuits. Therefore, it is possible to stabilize the operation of the blower A and, thus, to stabilize the operation of the vacuum cleaner 100.

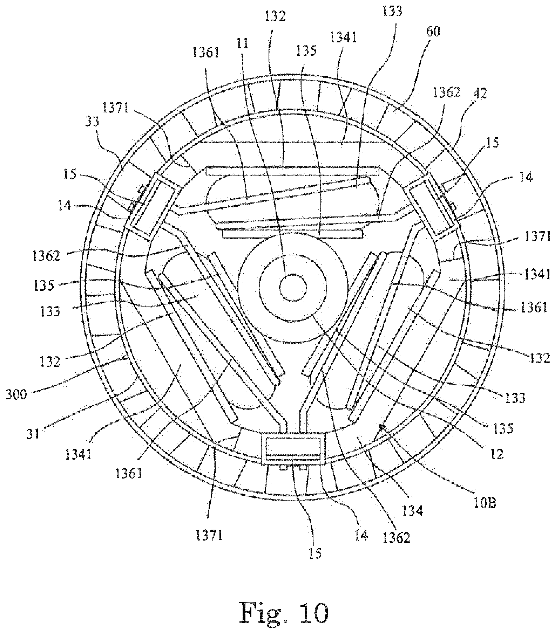

A motor according to another embodiment of the present disclosure is described with reference to the drawings. Fig. 10 is a bottom view of a motor and an upper motor housing according to another embodiment of the present disclosure. The motor 10B shown in Fig. 10 differs from the motor 10 in the shape of split stator cores 1341 and the positions of holder portions 14. The other features are the same as those of the motor 10 according to the previous embodiment. Portions that are substantially the same as those of the motor 10 are given the same reference numerals, and such portions are not described in detail.

As shown in Fig. 10, the split stator cores 1341 of the motor 10B are asymmetrical in the peripheral direction with the teeth 135 interposed therebetween. Therefore, joining portions 1371 where split stator cores 1341 that are adjacent to each other in the peripheral direction are joined to each other are displaced towards one side from the center of adjacent teeth 135 in the peripheral direction (in a clockwise direction in Fig. 10). The holder portions 14 and the terminals 15 are positioned at the center in the peripheral direction of teeth 135 that are adjacent to each other. That is, the terminals 15 are disposed at the center in the peripheral direction between the teeth 135 that are adjacent to each other in the peripheral direction.

Due to such an arrangement, the distances of the holder portions 14 and the terminals 15 from adjacent teeth 135 and coils 133 in the peripheral direction become equal to each other. Therefore, it becomes easy to wire the holder portions 14 and the terminals 15 from winding starting conducting wires 1361 from the coils 133 and from winding ending conducting wires 1362 from the coils 133 adjacent thereto. Since the joining portions 1371, the holder portions 14, and the terminals 15 are disposed at different positions in the peripheral direction, it is possible to easily join the split stator cores 1341 at the joining portions 1371 and to improve work efficiency.

The present disclosure is applicable to, for example, a blower and a vacuum cleaner including the blower.

Features of the above-described preferred embodiments and the modifications thereof may be combined appropriately as long as no conflict arises.

While preferred embodiments of the present disclosure have been described above, it is to be understood that variations and modifications will be apparent to those skilled in the art without departing from the scope of the present disclosure. The scope of the present disclosure, therefore, is to be determined solely by the following claims.

## Claims

1. A motor (10) comprising:
a shaft (11) that is disposed along a central axis (C) extending vertically and is configured to rotate around the central axis (C);
a rotor (12) that is secured to the shaft (11) and is configured to rotate together with the shaft (11); and
a stator (13) that is disposed to oppose the rotor (12) in a radial direction,
wherein the stator (13) includes
a ring-shaped stator core (131) that includes a plurality of split stator cores (1310) joined to each other in a peripheral direction,
a plurality of teeth (135) that extend in the radial direction from the respective split stator cores (1310), and
a plurality of coils (133) that are formed by winding a conducting wire around each of the plurality of teeth (135),
wherein electronic components (15) are disposed below the stator (13) in an axial direction,
wherein at least a part of each electronic component (15) overlaps the stator core (131) in the axial direction, and
wherein, when viewed in the axial direction, joining portions (137) where the split stator cores (1310) arranged in the peripheral direction are joined and the electronic components (15) are displaced in the peripheral direction.

2. The motor according to Claim 1, wherein the electronic components (15) are accommodated in insulating holder portions (14) .

3. The motor according to Claim 1 or Claim 2, wherein the electronic components (15) are terminals (15) to be connected to the coils (133).

4. The motor according to Claim 3, wherein the terminals (15) are disposed between the joining portions (137) and the teeth (135) in the peripheral direction.

5. The motor according to Claim 3, wherein the terminals (15) are disposed at a center in the peripheral direction between the teeth (135) that are adjacent to each other in the peripheral direction.

6. The motor according to any one of Claims 3 to 5, wherein the terminals (15) are disposed at equal intervals in the peripheral direction.

7. The motor according to any one of Claims 1 to 4, wherein the joining portions (137) where split stator cores (1310) that are adjacent to each other in the peripheral direction are joined to each other are disposed at a center in the peripheral direction between teeth (135) adjacent to each other in the peripheral direction.

8. The motor according to any one of Claims 1 to 7, wherein the plurality of coils (133) are connected by delta connection.

9. A blower (A) comprising:
an impeller (20); and
the motor (10) according to any one of Claims 1 to 8,
wherein the impeller is configured to be rotated by the motor (10) .

10. A vacuum cleaner (100) comprising
the blower (A) according to claim 9.
